# EUROPEAN PATENT APPLICATION

(11) **EP 2 743 868 A1**
(43) Date of publication of application: **18.06.2014**
(21) Application number: 12197238.4
(22) Date of filing: 14.12.2012
(51) Int. Cl.: G06Q 10/02, G07C 9/00

(54) **Virtual vehicle key**

(71) Applicant: Seven Principles AG, 50670 Köln (DE)
(72) Inventor: Kuchenbecker, Anja, 47877 Willich (DE); Farajollah-Zanjani, Reza, 41472 Neuss-Grefrath (DE)
(74) Representative: Grünecker, Kinkeldey, Stockmair & Schwanhäusser

(57) **Abstract**

The present invention relates to a system and a method for creating, distributing, and implementing virtual vehicle keys that provide safe access to vehicles without conventional physical keys. A back-end server creates a cryptographically secured virtual vehicle key for a selected vehicle and transmits same to a user's smart phone. The user may employ their smart phone to transmit the virtual vehicle key to a control unit of the vehicle via a near-field communication link. The control unit verifies the virtual vehicle key and unlocks the vehicle as appropriate.

## Description

### TECHNICAL FIELD

The present invention relates to a method and a system for fleet management, in particular to a method and system for implementing and distributing virtual vehicle keys for a plurality of vehicles.

### BACKGROUND OF THE INVENTION

In a convention fleet management system, each vehicle is equipped with a control unit and a (contact-less) smart card reader. Each subscriber of the fleet management service is provided with a individualized smart card for identifying themselves at the vehicle's control units. When a subscriber was successfully authenticated by means of his/her smart card, the control unit may check whether this particular subscriber is authorized for employing this particular vehicle. However, a communication link to a back-end server is generally indispensable for performing such an authorization process online. Alternatively, the control unit may be provided with a local (offline) database of all authorized subscribers. However, the local database needs regular updates in order to reflect changes in the authorization settings at the back-end.

### SUMMARY OF THE INVENTION

The object of the present invention is to provide an improved system and method for fleet management. Specifically, it is an object of the present invention to provide a fleet management system and method that is capable of authenticating and authorizing subscribers without having to distribute beforehand any individualized physical items (such as keys, tags, smart cards, etc.). It is a further object of the present invention to provide a fleet management system and method that is capable of managing the subscribers' authorizations without having to have an online communication link between the vehicle and the back-end or an offline authorization database in each vehicle. It is a further object of the present invention to provide a method and corresponding system for implementing and distributing virtual vehicle keys for a plurality of vehicles.

This is achieved by the features as set forth in the independent claims.

Preferred embodiments are the subject matter of dependent claims.

It is the particular approach of the present invention to generate a cryptographically secured virtual vehicle key at a back-end server, to transmit the virtual vehicle key to a user's mobile terminal, and to allow the user to transmit the virtual vehicle key from his mobile terminal to a control unit of the vehicle via near-field communication, so that the control unit may verify the virtual vehicle key and the information contained therein in order to lock or unlock the vehicle as appropriate.

According to a first aspect of the present invention, a method for implementing and distributing virtual vehicle keys for a plurality of vehicles is provided. The method comprising the steps of receiving a vehicle booking request at a back-end server; generating booking confirmation data at the back-end server in response to the received vehicle booking request; encrypting at least a portion of the booking confirmation data with a secret key; transmitting the at least partially encrypted booking confirmation data to a mobile terminal and storing the at least partially encrypted booking confirmation data at the mobile terminal as a virtual vehicle key; transmitting the at least partially encrypted booking confirmation data from the mobile terminal to a control unit of a vehicle through a near-field communication channel; decrypting and verifying the booking confirmation data at the control unit; and unlocking the vehicle if the booking confirmation data was successfully decrypted and verified.

Advantageously, the method further comprises the steps of updating the booking confirmation data and encrypting at least a portion of the updated booking confirmation data at the control unit; and transmitting the at least partially encrypted updated booking confirmation data from the control unit to the mobile terminal and storing the at least partially encrypted updated booking confirmation data at the mobile terminal as a new virtual vehicle key. In this manner, it can be ensured that each virtual key is only used once, which will strengthen the system against various attacks, in particular against replay attacks.

In a preferred embodiment, the method further comprises the steps of storing, at the back-end server, a unique secret key for each vehicle of the plurality of vehicles; and storing, at each vehicle of the plurality of vehicles, a key corresponding to the secret key stored at the back-end server for said vehicle; wherein the encrypting step is performed with the secret key stored at the back-end server for a selected one of the plurality of vehicles and the decrypting step is performed with the corresponding key stored at the vehicle. Moreover, for each vehicle of the plurality of vehicles, a unique pair of a secret key and a corresponding key may be generated and the secret keys may be transmitted, through a secure channel, to the back-end server and each corresponding key to the corresponding vehicle. In this manner, each virtual vehicle key can be decrypted by the selected vehicle only. Moreover, the damage caused by one of the keys being compromised remains confined to this particular vehicle.

In a particularly preferred embodiment, the booking confirmation data is encrypted with a symmetric-key algorithm with the corresponding key being a copy of the corresponding secret key. Other than being a particularly simple implementation, it also provides the option of the vehicle's control unit generating a new virtual vehicle key without any interference of the back-end server.

The booking confirmation data preferably comprises time information indicating a period of time during which the virtual vehicle key is operable to unlock the vehicle and/or vehicle information indicating at least one vehicle of the plurality of vehicles which the virtual vehicle key is operable to unlock. In this manner, the control unit may perform a time-dependent and/or a vehicle-dependent form of authorization.

In a preferred embodiment, the method further comprising the step of storing, at each control unit, a plurality of car tokens. The booking confirmation data comprises a token identifier and a cryptographic hash value. Verification of the booking confirmation data comprises computing a cryptographic hash value of a stored car token identified by the token identifier and comparing the computed cryptographic hash value with the cryptographic hash value contained in the booking confirmation data. In this manner, it may be ensured that each virtual vehicle key is only valid once and only for a specific vehicle. Moreover, security is greatly improved if the stored car tokens are difficult to guess or predict.

In a particularly preferred embodiment, the method further comprises the steps of overwriting the stored car token identified by the token identifier with a new car token after unlocking the vehicle; computing a cryptographic hash value of the new car token; updating the booking confirmation data by replacing the cryptographic hash value in the booking confirmation data with the cryptographic hash value computed for the new car token; encrypting at least a portion of the updated booking confirmation data with the secret key; and transmitting the at least partially encrypted updated booking confirmation data from the control unit to the mobile terminal and storing the at least partially encrypted updated booking confirmation data at the mobile terminal as a new virtual vehicle key. In this manner, each virtual vehicle key can only be used once. Moreover, replay attacks based on data exchanged via the near field communication link are effectively thwarted.

In a preferred embodiment, the encrypted portion of the at least partially encrypted booking confirmation data comprises a smart phone token, said smart phone token comprising a user PIN code and cryptographic hash values of the token identifier, of the corresponding car token, and of the booking time interval. The encrypted hash values may be used for verifying data integrity. The user PIN code, on the other hand, allows the control unit to create a new, PIN-protected virtual vehicle key.

In a preferred embodiment, the method further comprises the steps of PIN-encrypting the at least partially encrypted booking confirmation data with a user PIN code prior to transmitting same to the mobile terminal; and PIN-decrypting the at least partially encrypted booking confirmation data with the user PIN code prior to transmitting same to the vehicle's control unit. The PIN-encryption basically binds the virtual vehicle key to a specific user and can effectively prevent fraudulent use in case that the mobile terminal might be lost.

In a preferred embodiment, the method further comprising the steps of transmitting a lock key included in an unencrypted portion of the at least partially encrypted booking confirmation data from the mobile terminal to the control unit through the near-field communication channel; verifying the lock key at the control unit; and locking the vehicle if the lock key was successfully verified. In this manner, different keys may be used for unlocking (smart phone token) and locking (lock key) the vehicle, which further improves security of the system. Moreover, the user may lock the vehicle without having to go through the entire security process, i.e. without having to re-enter the PIN code.

According to another aspect of the present invention, a back-end server for a fleet management system is provided. The back-end server is operable to receive a vehicle booking request via a communication network; to generate booking confirmation data in response to the received vehicle booking request; encrypt at least a portion of the booking confirmation data with a secret key; and to transmit the at least partially encrypted booking confirmation data as a virtual vehicle key to a mobile terminal.

According to another aspect of the present invention, a control unit for a vehicle for use in a fleet management system together with the back-end server is provided. The control unit is operable to receive at least partially encrypted booking confirmation data from a mobile terminal through a near-field communication channel; to decrypt and verify the booking confirmation data; and to unlock the vehicle if the booking confirmation data was successfully decrypted and verified.

Preferably, the control unit is further operable to update the booking confirmation data; to encrypt at least a portion of the updated booking confirmation data; and to transmit the at least partially encrypted updated booking confirmation data as a new virtual vehicle key to the mobile terminal. In this manner, it can be ensured that each virtual key is only used once, which will strengthen the system against various attacks, in particular against replay attacks.

According to another aspect of the present invention, a computer program product is provided. The computer program product comprises a computer readable medium having computer readable program code embodied thereon, the program code being adapted, when executed by a computer, to receive at least partially encrypted booking confirmation data from a back-end server and to store the at least partially encrypted booking confirmation data as a virtual vehicle key; to transmit the stored at least partially encrypted booking confirmation data to a control unit of a vehicle through a near-field communication channel; and to receive at least partially encrypted updated booking confirmation data from the control unit of the vehicle and to store the at least partially encrypted updated booking confirmation data as a new virtual vehicle key.

The program code is preferably adapted to be executed on a mobile communication terminal, in particular on a mobile phone, a smart phone, etc.

The above and other objects and features of the present invention will become more apparent from the following description and preferred embodiments given in conjunction with the accompanying drawings, in which:
- Fig. 1: is a schematic representation of the communication performed between a back-end server, a mobile terminal, and a vehicle in a fleet management system according to an embodiment of the present invention;
- Fig. 2: is schematic representation of the data relating to cryptographic keys stored at the back-end server and the vehicles;
- Fig. 3: is schematic representation of the data relating to car tokens stored at the back-end server and the vehicles;
- Figs. 4A-B: are schematic representations of the data related to the virtual vehicle key;
- Fig. 5: is a schematic illustration of the process of generating the virtual vehicle key as performed by the back-end server;
- Fig. 6: is a schematic illustration of the process of employing the virtual vehicle key for unlocking a vehicle performed by the mobile terminal and the vehicle's control unit;
- Fig. 7: is a schematic illustration of the process of replacing the virtual vehicle key after the vehicle has been unlocked, performed by the mobile terminal and the vehicle's control unit; and
- Fig. 8: is schematic illustration of the process of transmitting a fresh list of car tokens from the back-end server to a vehicle.

### DETAILED DESCRIPTION

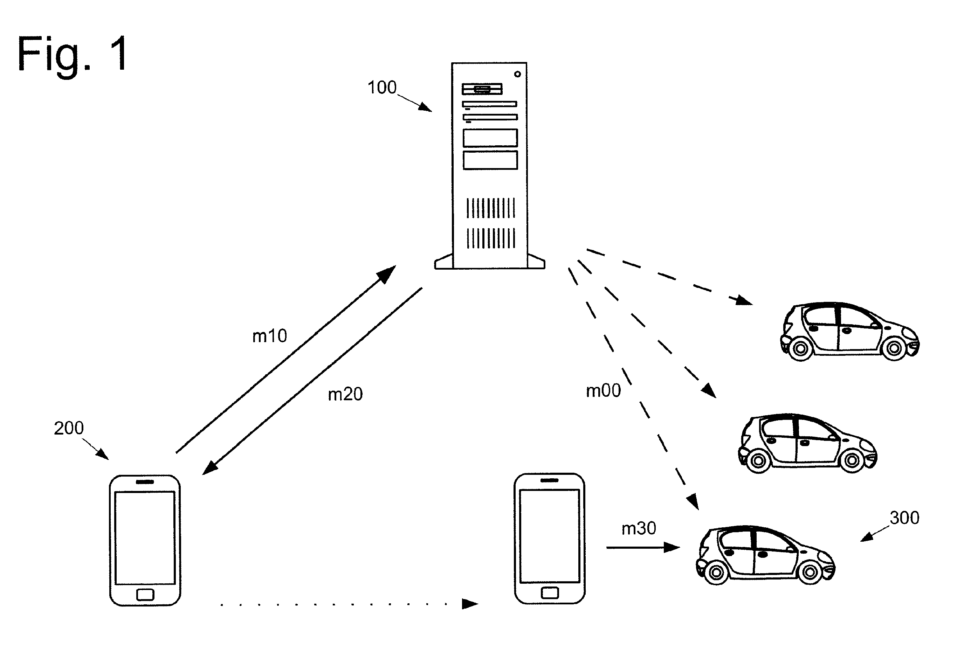

Fig. 1 shows a schematic representation of the communication performed between a back-end server 100, a mobile terminal 200, and a vehicle 300 in a fleet management system according to an embodiment of the present invention.

In an exemplary scenario, a user transmits a reservation or booking request (m10) for a vehicle from his/her smart phone 200 to a back-end server 100. At the back-end server, the request is processed and, provided that the request can be complied with, a booking confirmation (m20) is transmitted back the smart phone 200, where it is stored as a virtual key for the selected vehicle. For unlocking the vehicle, the user approaches the vehicle 300 and transmits (m30) the booking confirmation from their smart phone 200 to a control unit of the vehicle by means of near field communication. The control unit verifies the booking confirmation and unlocks the vehicle if the verification is successful. The system is secured by encrypting (at least relevant parts of) the communication between the back-end server, the mobile terminal, and the vehicle. Moreover, secret keys and/or predefined tokens are distributed to the vehicles beforehand (m00) in order to fortify the system against various types of attack.

According to the present invention, several cryptographic methods are employed in order to provide fraud protection. An overview of these methods will be given herebelow.

First of all, the vehicle's control unit may be in a position to confirm that the booking confirmation has indeed been issued by the back-end server. This may be achieved by applying a digital signature based on asymmetric cryptography. For instance, the back-end server may employ its private key (secret key) for encrypting the booking confirmation prior to sending it to the mobile terminal. The vehicle's control unit may then employ the corresponding public key for decrypting the booking confirmation as received from the mobile terminal. Successful decryption indicates that the sender was in possession of the back-end's private key.

In a preferred embodiment of the present invention, however, symmetric cryptography is employed for authenticating the booking confirmation. To this end, the back-end server and the vehicle share a secret key for encrypting and decrypting the booking confirmation. In this manner, a new virtual vehicle key may also be generated by the vehicle without intervention of the back-end server, if necessary.

Second, the vehicle's control unit may be in a position to determine whether the booking confirmation has been tampered with. This may be achieved by encrypting the entire booking confirmation with the back-end's secret key or by encrypting a cryptographic hash value of relevant unencrypted parts of the booking confirmation. The vehicle's control unit may then compute the cryptographic hash value from the received booking confirmation and compare same to the hash value contained in the encrypted part of the message received from the mobile terminal. If both hash values are identical, integrity of the message may be assumed.

According to a third aspect of the present invention, the system, in particular the communication between the mobile terminal and the vehicle, may be protected against replay attacks. This may be achieved by allowing each virtual vehicle key to be employed only once. Specifically, each vehicle is provided with a list of predefined car tokens, each of which will be used only once for unlocking the vehicle. The back-end server keeps track of the use of these tokens. Whenever a booking request is processed, the back-end server selects the next available car token for the selected vehicle and includes the selected token (or a hash code computed therefrom) in the booking confirmation. The vehicle's control unit may then compare the car token (or its hash code) contained in the booking confirmation with its own list of car tokens (or the respective hash codes). Upon successfully unlocking the vehicle, the control unit may delete the car token, overwrite the car token with a new token, or mark the token as being used.

According to a fourth aspect of the present invention, the virtual vehicle key may be vehicle-specific, i.e., operable to unlock only a specific one of a fleet of vehicles. This may be achieved by incorporating vehicle-specific information in the booking confirmation and/or by employing vehicle-specific keys for encrypting the booking confirmation. In a preferred embodiment, each vehicle is provided with a unique secret key for encrypting and decrypting the booking information. These keys are shared with the back-end, i.e., the back-end server has access to a database storing the secret key for each vehicle of the fleet. Upon generating the booking confirmation, the back-end server retrieves the secret key of the selected vehicle and encrypts the booking information with the retrieved key. In this manner, only the control unit of the selected vehicle is capable of decrypting the booking confirmation. As an additional advantage of this approach, there is a certain degree of damage containment in case that one the secret keys is compromised. In other words, security of only a single vehicle - rather than of the entire fleet - is compromised if one of the secret keys is compromised.

In addition to using vehicle-specific secret keys, the car tokens may be generated and distributed such that each car token is valid for a single, i.e., the selected vehicle only.

According to a fifth aspect of the present invention, the virtual vehicle key may be valid for a predefined period of time only, e.g., for a period of time relating to the booking time interval. This may be achieved by incorporating relevant time information in the booking confirmation and verifying the time information at the vehicle's control unit, for instance, by referring to a real time clock within in the control unit.

According to a sixth aspect of the present invention, the virtual vehicle key may be protected by an additional level of encryption based on a password or PIN code communicated to or selected by the legitimate user. An application running on the smart phone may require the user to enter the password or PIN code prior to transmitting the booking confirmation via near field communication to the vehicle's control unit. In this manner, the virtual vehicle key cannot be used by a third person even if the legitimate user loses their smart phone etc.

In the following, a preferred embodiment of the present invention will be described in greater detail.

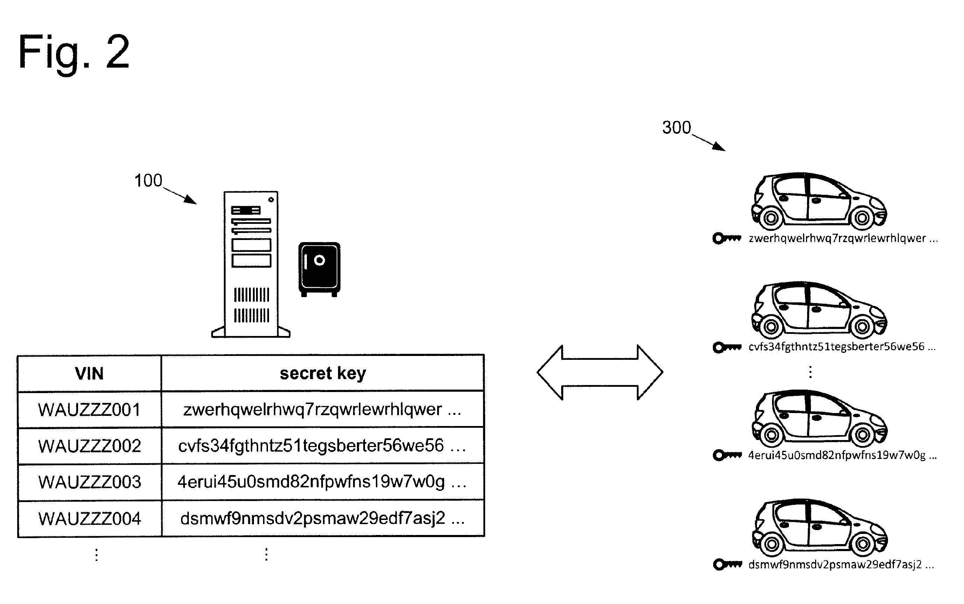

Fig. 2 is schematic representation of the data relating to cryptographic keys stored at the back-end server and the vehicles. As indicated in the figure, each vehicle 300 has a secret key for decrypting messages with the booking confirmation received from the back-end server 100 via the mobile terminal. In this example, a symmetric algorithm is employed, i.e., the back-end server employs the very same key for encrypting said message. In other words, the communication between the back-end server and the vehicle is based on a shared secret, viz. the secret key. The secret key, however, is unique for each vehicle and differs from vehicle to vehicle. Therefore, the back-end server is provided with (or has access to) a database in which the secret key of each vehicle is stored in association with an identifier of the vehicle, such as the vehicle identification number (VIN). Needless to say that suitable measures are taken to protect the secret keys stored at the vehicles and the back-end server from any unauthorized access.

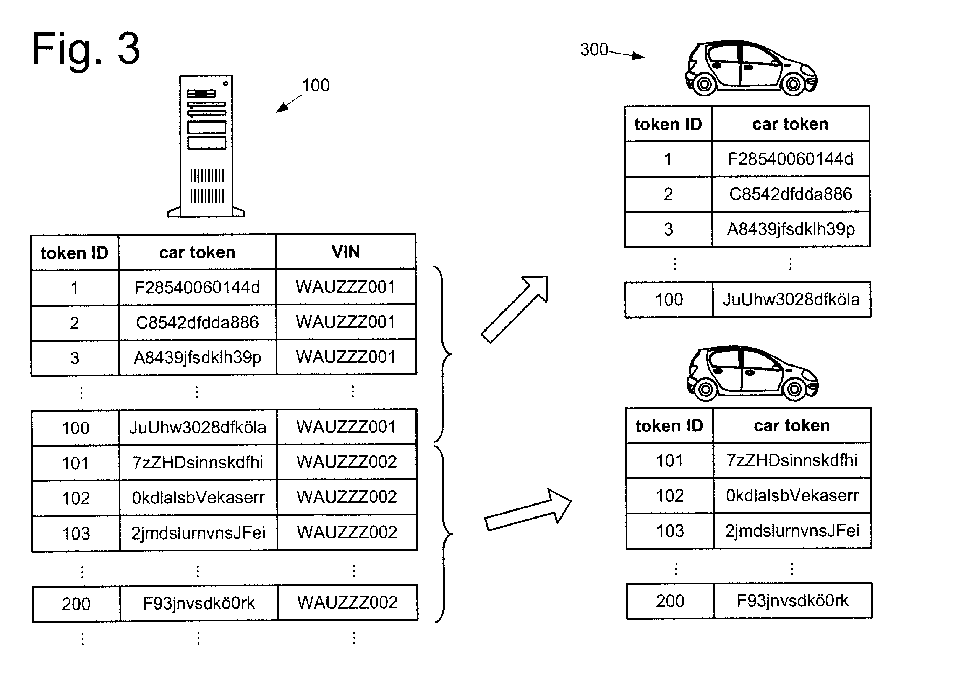

Fig. 3 is schematic representation of the data relating to car tokens stored at the back-end server and the vehicles. As explained above, each vehicle is provided with a list of car tokens that are used only once for communicating with the mobile terminal. Each car token is associated with a corresponding token identifier. The vehicle's current list of car tokens may be stored within the vehicle's control unit such that it is readily available independently of whether a direct communication link can be established between the vehicle and the back-end server when the user is about to unlock the vehicle by means of the virtual vehicle key stored in their mobile terminal. The number of car tokens that are concurrently stored in one of the vehicles should be large enough to avoid a situation in which car tokens become depleted before a direct communication link can be established between the vehicle and the back-end server, and small enough to avoid a security breach. Typical values for the number of concurrently stored car tokens are 10, 50, 100, 200 or 500 tokens, possibly depending on the length of each token and the number of theoretically possible values. However, other values may be used as needed.

The back-end server keeps track of the car tokens that are currently in use at each of the vehicles. To this end, the back-end server is provided with (or has access to) a database that stores each car token in association with the respective token identifier (e.g. a serial number) and an identifier of the vehicle to which said car token has been distributed (e.g. VIN). The back-end server may access the token database and retrieve a fresh car token when processing a booking request for a certain vehicle.

The back-end server is also responsible for generating and distributing new car tokens whenever one of the vehicle runs out of unused car tokens or whenever the number of unused car tokens falls below a certain number. New car tokens are generated in a (pseudo-)random manner so that new tokens cannot be predicted from previous tokens. Moreover, car tokens are preferably generated in such a way that new car tokens are unique, at least within the set of car tokens that are currently in use within the fleet of vehicles. In this manner, each car token is vehicle-specific, i.e., only valid for the vehicle for which the token was generated.

The back-end server generates a fresh list of car tokens upon request by any of the vehicles. The freshly generated list of car tokens will be transmitted from the back-end server to the vehicle by means of a secure communication channel (m00 in Fig. 1). Any means for securing the communication channel may be employed, including encrypting the data prior to wireless transmission, for example on the basis of the secret key shared between the back-end server and the vehicle (cf. Fig. 2).

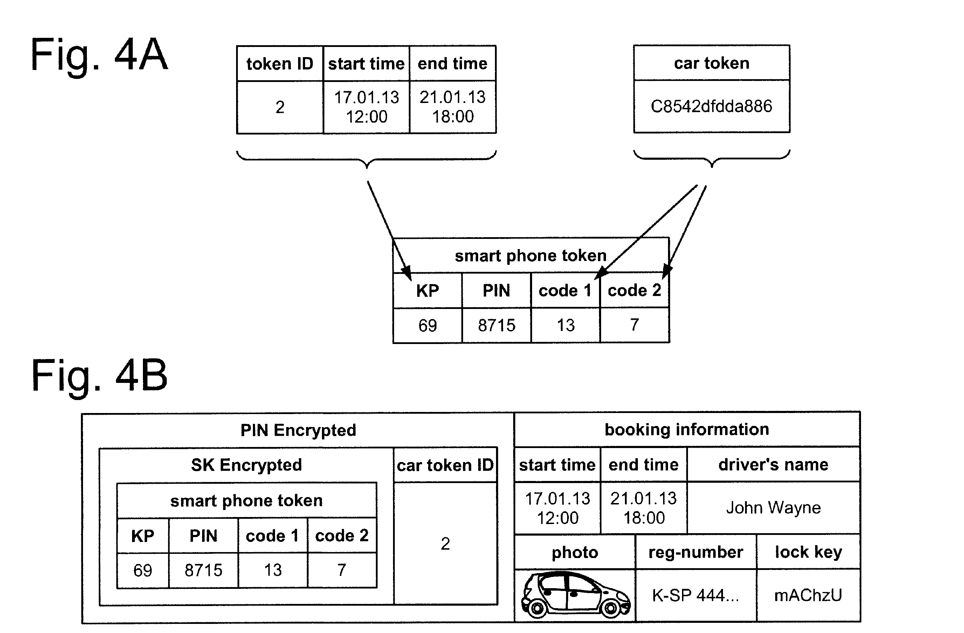

Figs. 4A and 4B are schematic representations of the data related to the virtual vehicle key generated in response to a booking request at the back-end server and stored on the mobile terminal.

Fig. 4A is a schematic and exemplary data structure of a smart phone token that forms the heart of the virtual vehicle key, as it is generated at the back-end server. The smart phone token may comprise information on an unused car token of the selected vehicle, information on a booking time interval, and information on a user PIN. In the specific example of Fig. 4A, the smart phone token includes data fields "KP", "PIN", "code 1", and "code 2". Data field "KP" holds a cryptographic hash value of data representing the token ID of the selected car token, a start time and an end time of the booking interval. The cryptographic hash value may be computed with any suitable cryptographic hash algorithm known in the art including MD5, SHA-3, SHA-512, etc. Data field "PIN" holds a personal identification number which has to be entered by the user before starting the near field communication with the vehicle's control unit. "Code 1" and "Code 2" hold two cryptographic hash values of the selected car token generated by two different cryptographic hash algorithms. For security reasons, the car token itself is not included in the virtual vehicle key.

Fig. 4B is a schematic representation of an exemplary data structure used for storing the virtual vehicle key on the mobile terminal. The virtual vehicle key comprises the smart phone token illustrated in Fig. 4A in encrypted form. Specifically, the smart phone token is encrypted with the shared secret key (SK) of the selected vehicle. Any suitable cryptographic algorithm known in the art may be used for encrypting the smart phone token, including AES, IDEA, etc. The SK-encrypted smart phone token is then combined with the identifier of the selected car token (car token ID) and encrypted with the PIN code that is already contained in the smart phone token.

The PIN-SK-encrypted smart phone token and the PIN-encrypted token ID may be further complemented with unencrypted booking information, such as start/end time, driver's name, as well as with vehicle-specific information, such as a photo and its registration number. The unencrypted booking information may be used in an application program running on the mobile terminal for displaying relevant information to the user. The cryptographic hash values included in the SK-encrypted smart phone token may be functional for protecting at least part of the attached unencrypted booking information against tampering. In other words, the encrypted smart phone token may be used as a digital signature of the booking information.

The unencrypted booking information may also comprise a code (lock key) for locking the vehicle. The lock key may be transmitted (via near field communication) from the mobile terminal to the vehicle's control unit. The control unit may be adapted for verifying the lock key received from the mobile terminal and for locking the vehicle (for instance by activating the central locking system and/or the engine immobiliser, etc.) if the verification was successful. The verification may comprise a comparison of the received lock key with a corresponding key stored within the control unit. The lock key may be vehicle-specific, and/or independent of booking and reservation details. The advantage of using separate keys for locking and unlocking the vehicle is that the sensitive unlocking key (smart phone token) does not have to be re-used for locking the vehicle, which might result in a security breach with regard to replay attacks, etc. Further, there is no need to provide the same level of protection for the locking key as for the unlocking key. Therefore, the user may lock the vehicle without having to enter the PIN code.

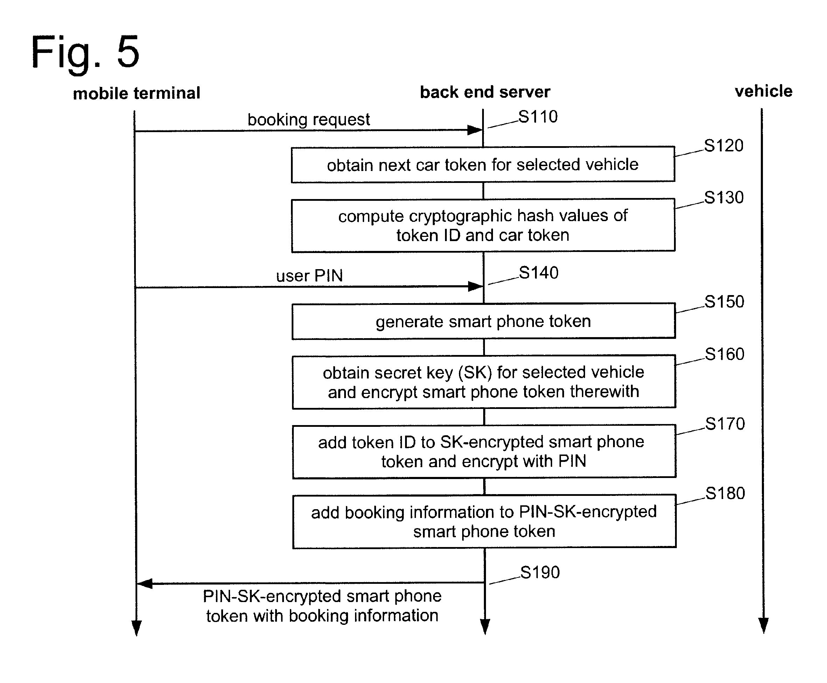

Fig. 5 is a schematic illustration of the process of generating the virtual vehicle key performed by the back-end server.

The process starts in step S110 with receiving a booking request at the back-end server. The booking request may originate from a mobile terminal or any other source, including other network- or Internet-enabled computers. The booking request may indicate a desired vehicle or any other information that may be used by the back-end server to select at least one vehicle from the fleet of vehicles managed by the system.

In step S120, the back-end server obtains an unused car token of the selected vehicle, for instance, by referring to the database illustrated in Fig. 3. In step S130, the back-end server computes cryptographic hash values of the obtained car token and the corresponding token ID.

In step 140, the back-end server receives a user-selected PIN code that will be used for preventing unauthorized access to the virtual vehicle key. However, the user PIN may also be selected by the back-end server, or obtained from any other source and communicated to the user.

The computed hash values, the PIN code, and other booking information are used in step S150 for generating the smart phone token, as explained above in connection with Fig. 4A. In step S160, the back-end server retrieves the secret key for the selected vehicle from the database indicated in Fig. 2 in order to encrypt the smart phone token with the obtained secret key. The SK-encrypted smart phone token is then complemented with the selected car token ID and encrypted with the user PIN obtained in step S140. Finally, the PIN-SK-encrypted smart phone token is further complemented with additional booking information as explained above in connection with Fig. 4B (step S180) and transmitted to the user's mobile terminal (S190).

As mentioned above, the booking request does not need to originate from the mobile terminal to which the virtual vehicle key will finally be transmitted. Instead, the booking request may be sent from any Internet-enabled computer, for instance, via a web page provided by the back-end server or any other web server. Further, the virtual vehicle key is not necessarily "pushed" onto the user's mobile terminal. Instead, the back-end server may transmit a message, such as a SMS (short message service) to the mobile terminal to notify the user that the virtual vehicle key is ready for download. The telephone number of the mobile terminal may be entered by the user on the web form used for booking the vehicle or be stored in a database at the back-end server in association with other user data. The sending of the booking request and/or the downloading of the vehicle key may be performed by a suitable application program running on the mobile terminal.

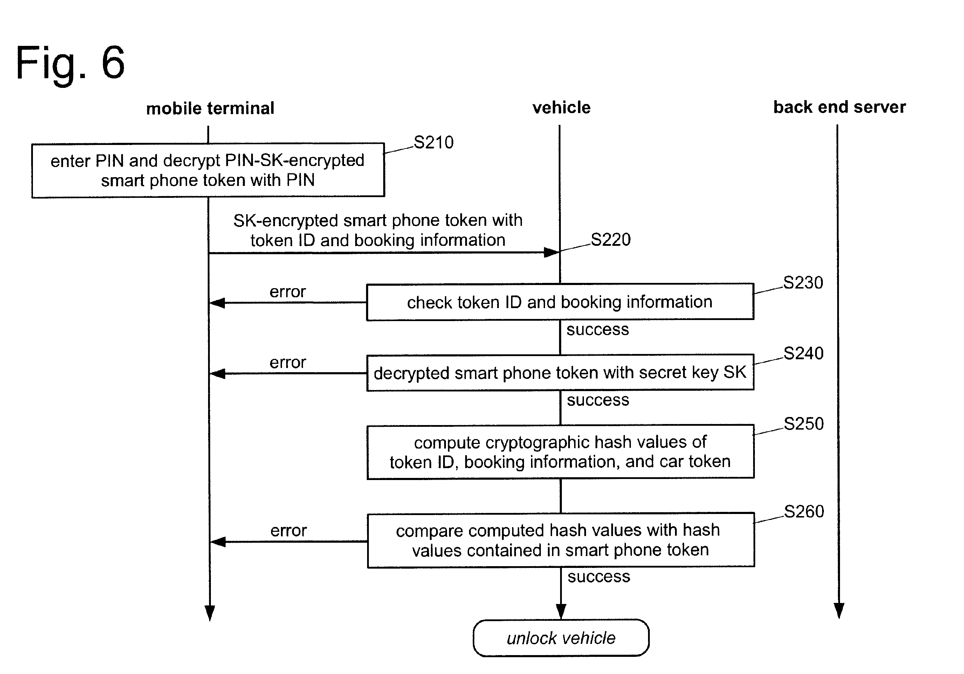

Fig. 6 is a schematic illustration of the process of employing the virtual vehicle key for unlocking a vehicle, performed by the mobile terminal and the vehicle's control unit.

In step S210, the user enters the PIN code in order to allow the mobile terminal to PIN-decrypt the car token ID and the SK-encrypted smart phone token. The car token ID, the SK-encrypted smart phone token, and (a subset of) the unencrypted booking information are transmitted via a near field communication channel to the vehicle's control unit in step S220. The near field communication channel may be any suitable communication channel, including infrared communication, short-range radio communication (e.g. bluetooth, WiFi, etc.), RFID-based communication, and communication standards defined by the NFC Forum. The vehicle's control unit will then check whether the transmitted token ID is stored in its list of unused car tokens or not. If not, an error may be asserted and the process terminates. In addition, the control unit may also check the booking information in order to confirm, for instance, whether the attempt to unlock the vehicle is within the booking time (S230). The check may also involve other items of the booking information, such as registration number of the vehicle, the lock key, etc.

If the check was successful, the control unit will decrypt the SK-encrypted smart phone token with its local copy of the shared secret key (S240). If the smart phone token was successfully decrypted, the control unit may proceed with a computation of the cryptographic hash values of the transmitted token ID, the corresponding car token stored at the vehicle, and the transmitted booking information (start time, end time) (S250) and compare these hash values with the hash values contained in the decrypted smart phone token (S260). If there is a discrepancy between these values, the virtual vehicle key is considered to be invalid and an error may be asserted. If the hash values are found to match, integrity of the data is assumed and the vehicle may be unlocked (e.g., by opening doors via a central locking system and/or disabling an engine immobiliser, an alarm system etc.).

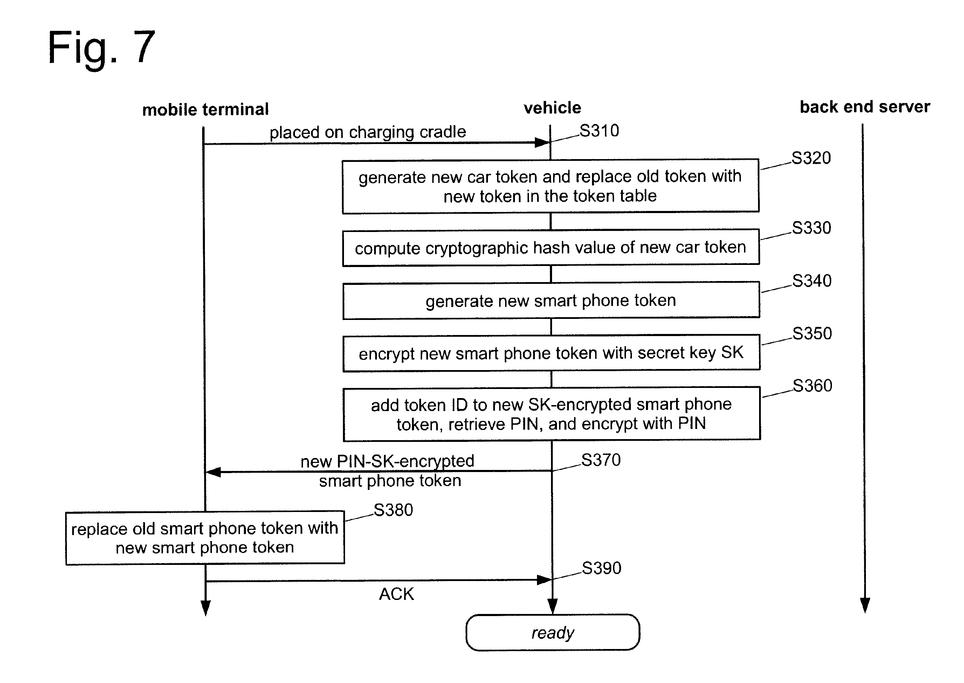

Fig. 7 is a schematic illustration of the process of replacing the virtual vehicle key after the vehicle has been unlocked, performed by the mobile terminal and the vehicle's control unit.

In order to secure the unlocking process, each virtual vehicle key may only be used once. This is achieved by invalidating the current car token stored in the vehicle, for instance, by marking the token as being used, deleting the car token, or overwriting the car token with a different one. In order to avoid a rapid depletion of tokens, the current car token may be replaced with a newly created one, rather than using the next token on the list.

The process of replacing the current car token and renewing the virtual vehicle key may start in step S310 when the vehicle was successfully unlocked and when the mobile terminal has been placed on a (charging) cradle inside of the vehicle. The vehicle's control unit may then generate a new car token, for instance, by means of a random number generator without intervention of the back-end server, and replace the currently used car token with the newly created one (S320). The token ID may remain unchanged.

With the new car token, the virtual vehicle key stored in the mobile terminal has to be updated as well. To this end, the control unit may compute the cryptographic hash value(s) of the new car token (S330) and generate a new smart phone token (S340) in a manner similar to that explained above in connection with Fig. 4A. Next, the new smart phone token may be encrypted with the vehicle's secret key (S350) and complemented with the token ID. The combination of the new smart phone token and the token ID may then be encrypted in step S360 with the user's PIN code, which was part of the original smart phone token. The new PIN-SK-encrypted smart phone token may then be transmitted back to mobile phone (S370) in order to replace the previous smart phone token (S380). The mobile terminal may acknowledge safe receipt of the new smart phone token (S390) and the control unit may allow the engine to be started.

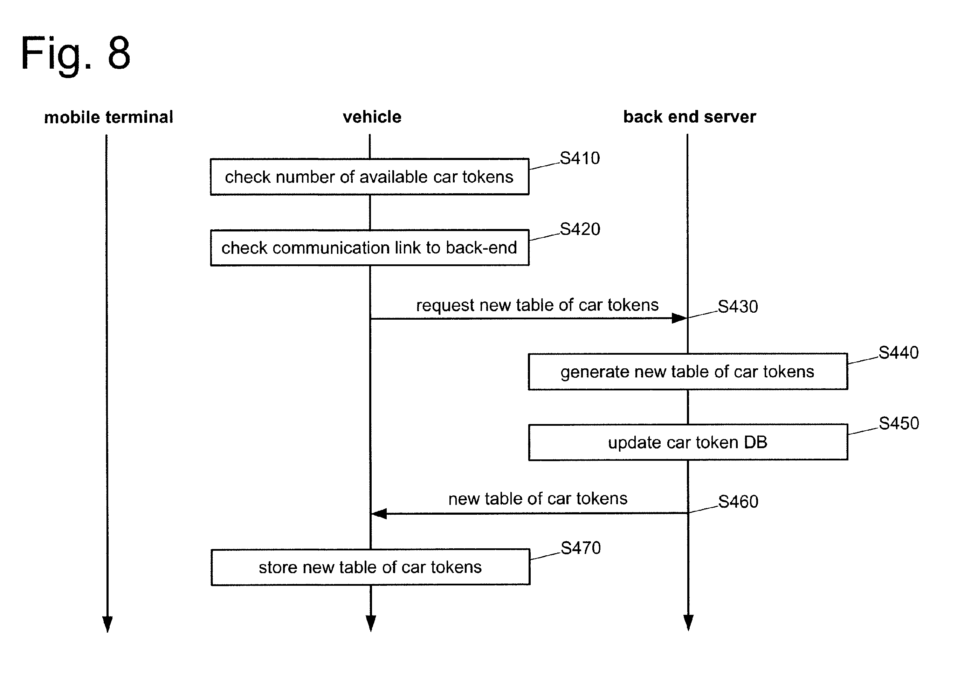

Fig. 8 is a schematic illustration of the process of transmitting a fresh list of car tokens from the back-end server to a vehicle. The process may start in step S410, when the vehicle's control unit checks the number of unused car tokens on it's list. This check may be performed on a regular basis or may be event triggered. When the the number of remaining car tokens is low, e.g. below a certain minimum number of tokens, the control unit may check whether a communication link to the back-end server can be established (S420). The communication link may be any suitable data link, such as data communication over a mobile telephone system. Once a communication link is established, the control unit may request the back-end server to transmit a fresh list of car tokens (S430). This request may comprise data required for authenticating the vehicle and/or the vehicle's control unit at the back-end server. The back-end server may respond to a legitimate request by generating a new list of car tokens for the requesting vehicle and by updating the server's database accordingly (S440, S450), as explained above. The new list is transmitted to the requesting vehicle in step S460. The transmission of the new car tokens may be secured by suitable cryptographic algorithms, for instance on the basis of the shared secret key. The vehicle may add the received list of new car tokens to its own database in step S470.

Summarizing, the present invention relates to a system and a method for creating, distributing, and implementing virtual vehicle keys that provide safe access to vehicles without conventional physical keys. A back-end server creates a cryptographically secured virtual vehicle key for a selected vehicle and transmits same to a user's smart phone. The user may employ their smart phone to transmit the virtual vehicle key to a control unit of the vehicle via a near-field communication link. The control unit verifies the virtual vehicle key and unlocks the vehicle as appropriate.

## Claims

1. A method for implementing and distributing virtual vehicle keys for a plurality of vehicles, said method comprising the steps of:
receiving (S110) a vehicle booking request (m10) at a back-end server (100);
generating (S130, S150) booking confirmation data at the back-end server (100) in response to the received vehicle booking request (m10);
encrypting (S160) at least a portion of the booking confirmation data with a secret key;
transmitting (S190) the at least partially encrypted booking confirmation data (m20) to a mobile terminal (200) and storing the at least partially encrypted booking confirmation data at the mobile terminal (200) as a virtual vehicle key;
transmitting (S220) the at least partially encrypted booking confirmation data (m30) from the mobile terminal (200) to a control unit of a vehicle (300) through a near-field communication channel;
decrypting (S240) and verifying (S250, S260) the booking confirmation data at the control unit; and
unlocking the vehicle (300) if the booking confirmation data was successfully decrypted and verified.

2. A method according to claim 1, further comprising the steps of
updating (S340) the booking confirmation data and encrypting (S350, S360) at least a portion of the updated booking confirmation data at the control unit;
and
transmitting (S370) the at least partially encrypted updated booking confirmation data from the control unit to the mobile terminal (200) and storing the at least partially encrypted updated booking confirmation data at the mobile terminal (200) as a new virtual vehicle key.

3. A method according to claim 1 or 2, further comprising the steps of:
storing, at the back-end server (100), a unique secret key for each vehicle (300) of the plurality of vehicles; and
storing, at each vehicle (300) of the plurality of vehicles, a key corresponding to the secret key stored at the back-end server (100) for said vehicle (300);
wherein the encrypting step (S160) is performed with the secret key stored at the back-end server (100) for a selected one of the plurality of vehicles and the decrypting step is performed with the corresponding key stored at the vehicle (300).

4. A method according to claim 3, further comprising the steps of:
generating, for each vehicle (300) of the plurality of vehicles, a unique pair of a secret key and a corresponding key; and
transmitting, through a secure channel, the secret keys to the back-end server (100) and each corresponding key to the corresponding vehicle (300).

5. A method according to claim 3 or 4, wherein the booking confirmation data is encrypted with a symmetric-key algorithm with the corresponding key being a copy of the corresponding secret key.

6. A method according to any of the preceding claims, wherein the booking confirmation data comprises time information indicating a period of time during which the virtual vehicle key is operable to unlock the vehicle (300) and/or vehicle information indicating at least one vehicle (300) of the plurality of vehicles which the virtual vehicle key is operable to unlock.

7. A method according to any of claims 1 to 6, further comprising the steps of
storing, at each control unit, a plurality of car tokens;
wherein the booking confirmation data comprises a token identifier and a cryptographic hash value, and
wherein verification of the booking confirmation data comprises computing (S250) a cryptographic hash value of a stored car token identified by the token identifier and comparing (S260) the computed cryptographic hash value with the cryptographic hash value contained in the booking confirmation data.

8. A method according to claim 7, further comprising the steps of:
overwriting (S320) the stored car token identified by the token identifier with a new car token after unlocking the vehicle (300);
computing (S330) a cryptographic hash value of the new car token;
updating (S340) the booking confirmation data by replacing the cryptographic hash value in the booking confirmation data with the cryptographic hash value computed for the new car token;
encrypting (S350, S360) at least a portion of the updated booking confirmation data with the secret key; and
transmitting (S370) the at least partially encrypted updated booking confirmation data from the control unit to the mobile terminal (200) and storing the at least partially encrypted updated booking confirmation data at the mobile terminal (200) as a new virtual vehicle key.

9. A method according to claim 7 or 8, wherein the encrypted portion of the at least partially encrypted booking confirmation data comprises a smart phone token, said smart phone token comprising a user PIN code and cryptographic hash values of the token identifier, of the corresponding car token, and of the booking time interval.

10. A method according to any of claims 1 to 9, further comprising the steps of
PIN-encrypting the at least partially encrypted booking confirmation data with a user PIN code prior to transmitting same to the mobile terminal; and
PIN-decrypting the at least partially encrypted booking confirmation data with the user PIN code prior to transmitting same to the vehicle's control unit.

11. A method according to any of claims 1 to 10, further comprising the steps of:
transmitting a lock key included in an unencrypted portion of the at least partially encrypted booking confirmation data from the mobile terminal (200) to the control unit through the near-field communication channel;
verifying the lock key at the control unit; and
locking the vehicle (300) if the lock key was successfully verified.

12. A back-end server operable to
receive (S110) a vehicle booking request (m10) via a communication network;
generate (S130, S150) booking confirmation data in response to the received vehicle booking request (m10);
encrypt (S160) at least a portion of the booking confirmation data with a secret key;
transmit (S190) the at least partially encrypted booking confirmation data (m20) as a virtual vehicle key to a mobile terminal (200).

13. A control unit for a vehicle, said control unit being operable to
receive (S220) at least partially encrypted booking confirmation data (m30) from a mobile terminal (200) through a near-field communication channel;
decrypt (S240) and verify (S250, S260) the booking confirmation data; and
unlock the vehicle (300) if the booking confirmation data was successfully decrypted and verified.

14. The control unit of claim 13, being further operable to
update (S340) the booking confirmation data;
encrypt (S350, S360) at least a portion of the updated booking confirmation data; and
transmit (S370) the at least partially encrypted updated booking confirmation data as a new virtual vehicle key to the mobile terminal (200).

15. A computer program product comprising a computer readable medium having computer readable program code embodied thereon, the program code being adapted, when executed by a computer, to
receive (S190) at least partially encrypted booking confirmation data (m20) from a back-end server and to store the at least partially encrypted booking confirmation data as a virtual vehicle key;
transmit (S220) the stored at least partially encrypted booking confirmation data (m30) to a control unit of a vehicle (300) through a near-field communication channel; and
receive (S370) at least partially encrypted updated booking confirmation data from the control unit of the vehicle (300) and to store the at least partially encrypted updated booking confirmation data as a new virtual vehicle key.
